# EUROPÄISCHE PATENTSCHRIFT

(11) **EP 3 669 130 B1**
(45) Veröffentlichungstag und Bekanntmachung des Hinweises auf die Patenterteilung: **05.04.2023**
(21) Anmeldenummer: 18743013.7
(22) Anmeldetag: 19.07.2018
(51) Int. Cl.: F25D 17/04, F25D 23/08, F25D 23/02

(54) **KÄLTEGERÄT**
REFRIGERATOR
RÉFRIGÉRATEUR

(30) Priorität: 16.08.2017 DE 102017214239
(43) Veröffentlichungstag der Anmeldung: 24.06.2020
(73) Patentinhaber: BSH Hausgeräte GmbH, 81739 München (DE)
(72) Erfinder: RAAB, Alfred, 73460 Hüttlingen (DE); ELSER, Oliver, 89551 Königsbronn (DE); HILLMANN, Simon, 89561 Dischingen (DE); MAYER, Markus, 89551 Königsbronn (DE); DIEBOLD, Jürgen, 89568 Hermaringen (DE)
(86) Internationale Anmeldenummer: PCT/EP2018/069580
(87) Internationale Veröffentlichungsnummer: WO 2019/034358

(56) Entgegenhaltungen:
- EP-A1- 3 006 869
- CN-A- 106 500 442
- FR-A1- 2 445 916
- JP-A- H0 882 472
- US-A1- 2011 220 663

## Beschreibung

Die Erfindung betrifft ein Kältegerät, insbesondere Haushaltskältegerät mit einem Korpus und einer Tür, die gemeinsam einen Lagerraum begrenzen, sowie mit einer zwischen dem Korpus und der Tür angeordneten Dichtung, die zumindest teilweise in einer Dichtungsaufnahme angeordnet ist, die Dichtungsaufnahme aufweisend einen Durchgangsabschnitt zum Überbrücken der Dichtung.

Bei einem derartigen Kältegerät, insbesondere bei einem Haushaltskältegerät, wie beispielsweise einem Kühlschränk, einem Gefrierschränk oder einer Kühl-Gefrier-Kombinationen, strömt beim Öffnen des Verschlusselements Luft aus der Umgebung in den Lagerraum ein. Relativ kühle Luft innerhalb des Lagerraums wird dabei durch relativ warme Luft aus der Umgebung ersetzt. Nach dem Schließen des Verschlusselements kühlt die Luft innerhalb des Lagerraums relativ schnell ab, sodass sich ein Unterdruck im Lagerraum bildet. Dieser Unterdruck erschwert ein zeitlich direkt folgendes, nochmaliges Öffnen des Verschlusselements.

Um einen auf diese Weise entstandenen Unterdruck im Lagerraum abzubauen, ist es aus dem Stand der Technik bekannt, im Bereich der Dichtung einen Durchgangsabschnitt zum Überbrücken der Dichtung vorzusehen. Zwar besteht der eigentliche Zweck der Dichtung darin, einen Luftaustausch zwischen der Umgebung und dem Lagerraum zu vermeiden, sobald das Verschlusselement geschlossen ist. Der Durchgangsabschnitt hingegen soll jedoch auch bei einem geschlossenen Verschlusselement einen ausreichenden Luftaustausch zwischen Lagerraum Umgebung gewährleisten, sodass sich ein entstandener Unterdruck im Lagerraum abbauen kann. Das Überbrücken ermöglicht somit einen minimalen Luftstrom, z.B. unterhalb der Dichtung, trotz geschlossener Tür in den Lagerraum zu strömen.

Aus der DE 10 2015 220 351 A1 ist ein Haushaltskältegerät mit einem Kühlraum und einem Gefrierraum und einem Druckausgleichsventil bekannt. Dabei offenbart die DE 10 2015 220 351 A1 einen Verbreiterungsbereich in welchem ein Dichtungsbereich beabstandet zu einer Innenseite des Verbreiterungsbereichs angeordnet ist, sodass ein dauerhaft vorhandener Spalt ausgebildet ist, in dem Luft einströmen kann.

EP 3 006 869 A1 offenbart ein weiteres aus dem Stand der Technik bekanntes Kältegerät.

Die Aufgabe der vorliegenden Erfindung liegt darin, ein gattungsgemäßes Kältegerät bereitzustellen, welches gegenüber dem Stand der Technik verbesserte Eigenschaften aufweist.

Die Aufgabe wird durch ein Kältegerät gemäß dem unabhängigen Anspruch gelöst. Demzufolge ist bei einem gattungsgemäßen Kältegerät vorgesehen, dass der Durchgangsabschnitt wenigstens zwei Durchgangskanäle aufweist.

Die vorliegende Erfindung beruht dabei auf der Erkenntnis, dass zwar ein Durchgangsabschnitt mit einem Mindestströmungsquerschnitt eines Durchgangskanals zum sicheren und schnellen Abbauen des Unterdrucks im Lagerraum notwendig ist. Erfindungsgemäß soll der dazu notwendige Strömungsquerschnitt jedoch auf wenigstens zwei Durchgangskanäle aufgeteilt sein. Da der Strömungsquerschnitt jedes einzelnen Durchgangskanals somit kleiner dimensioniert werden kann, als beim Einsatz eines einzigen Durchgangskanals, können die wenigstens zwei Durchgangskanäle einfacher, insbesondere mit weniger Anpassungen an die Umgebungsgeometrie, in das Kältegerät integriert werden. Insbesondere jedoch wird durch den Einsatz von wenigstens zwei Durchgangskanälen die Zuverlässigkeit des Durchgangsabschnittes insgesamt erhöht.

Das Ausformen von wenigstens zwei, entsprechend kleindimensionierten Durchgangskanälen erhöht nämlich lokal an dem Bereich des Durchgangsabschnitts die Festigkeit. Unerwünschte - auch nur kleine - Verformungen in diesem kritischen Bereich, welche zu einer eingeschränkten Funktionalität bei der Überbrückung der Dichtung führen können, sind deutlich reduziert. Darüber hinaus kann erfindungsgemäß die Wahrscheinlichkeit erhöht werden, dass auch in widrigen Betriebszuständen, wenn zum Beispiel die Dichtung durch starkes Anpressen des Verschlusselements an den Korpus einen Durchgangskanal (im Wesentlichen) blockiert, zumindest wenigstens ein weiterer Durchgangskanal zum Abbau des Unterdrucks bereitsteht. Letztendlich erlaubt die Erfindung auch eine vergleichsweise unauffällige Ausbildung des Durchgangsabschnitts. Der erfindungsgemäße Durchgangsabschnitt ist somit für einen Benutzer auch bei geöffnetem Verschlusselement weniger deutlich bzw. überhaupt nicht wahrnehmbar.

Das Verschlusselement kann durch eine Tür, eine Klappe oder eine Schubladenfront gebildet sein. In einer geöffneten Stellung des Verschlusselements wird ein Innenbereich des Korpus, insbesondere der Lagerraum für zu kühlendes oder zu gefrierendes Gut, abhängig von dem Öffnungswinkel teilweise oder vollständig für einen Benutzer zugänglich. Das Verschlusselement kann eine in einer geschlossenen Stellung geschlossenen Stellung dem Korpus zugewandte Innenwandung und eine dem Korpus abgewandte Außenwandung aufweisen. Die Innenwandung und die Außenwandung des Verschlusselements können einen mit thermischem Isolationsmaterial gefüllten Hohlraum begrenzen.

Die Dichtung ist wenigstens abschnittsweise zwischen dem Korpus und dem Verschlusselement angeordnet. Insbesondere kann die Dichtung vollständig zwischen dem Korpus und dem Verschlusselement angeordnet sein. Die Dichtungsaufnahme kann entweder an dem Korpus oder an dem Verschlusselement ausgebildet sein. Möglich ist insbesondere, dass die Dichtungsaufnahme durch eine an dem Verschlusselement gebildete, insbesondere umlaufend geschlossene, Aufnahmenut gebildet ist.

Indem der Durchgangsabschnitt die Dichtung überbrückt, ermöglichte der Durchgangsabschnitt einen Luftaustausch zwischen dem Lagerraum und der Umgebung bei geschlossenem Verschlusselement.

Ausführungsformen der Erfindung sind in den abhängigen Ansprüchen angegeben.

Gemäß einer Ausführungsform ist vorgesehen, dass die wenigstens zwei Durchgangskanäle unter einem Winkel, vorzugsweise zwischen 60 Grad und 120 Grad, weiter vorzugsweise zwischen 75 Grad und 105 Grad, in Bezug auf eine Längsrichtung der Dichtungsaufnahme angeordnet sind. Denkbar ist insbesondere, dass die wenigstens zwei Durchgangskanäle unter einem Winkel von im wesentlichen 90 Grad in Bezug auf eine Längsrichtung der Dichtungsaufnahme angeordnet sind. Mit anderen Worten ist eine Längsrichtung der wenigstens zwei Durchgangskanäle gegenüber einer Längsrichtung der Dichtungsaufnahme quer angeordnet. Unter Längsrichtung ist hierbei jeweils die Haupterstreckungsrichtung der Dichtungsaufnahme, zum Beispiel Aufnahmenut, bzw. eines Durchgangskanals zu verstehen. Eine derartige Ausrichtung der wenigstens zwei Durchgangskanäle in Bezug auf die Dichtungsaufnahme ermöglicht eine sehr kompakte Ausbildung des Durchgangsabschnitts.

Zwar ist es grundsätzlich möglich, dass die wenigstens zwei Durchgangskanäle durch im Wesentlichen geschlossene, d.h. rohrförmige Kanäle gebildet sind. Eine einfache Fertigung des Durchgangsabschnitts bzw. Reinigung der Durchgangskanäle wird jedoch dadurch ermöglicht, dass die wenigstens zwei Durchgangskanäle, insbesondere auschsließlich, durch jeweils zwei Seitenwände sowie eine Bodenwandung begrenzt sind. Die wenigstens zwei Durchgangskanäle können somit durch Nuten oder Rinnen gebildet sein. Insbesondere kann somit vorgesehen sein, dass die wenigstens zwei Durchgangskanäle bei senkrechtem Blick auf den Durchgangsabschnitt nach oben hin offen ausgebildet sind. Die Seitenwände der wenigstens zwei Durchgangskanäle können durch voneinander separate Wandungen gebildet sein. Querschnitte der wenigstens zwei Durchgangskanäle können beispielsweise eine Halbkreisbogenform, eine U-Form oder eine V-Form aufweisen. Der Querschnitt eines Durchgangskanals wird durch einen Schnitt entlang einer senkrecht zu der Längsrichtung des Durchgangskanals liegenden Ebene gebildet. Die wenigstens zwei Durchgangskanäle können entlang ihrer Längsrichtung einen konstanten Querschnitt oder einen sich entlang ihrer Längsrichtung verändernden Querschnitt aufweisen. Die Querschnitte der wenigstens zwei Durchgangskanäle können identisch oder unterschiedlich zueinander sein.

Erfindungsgemäß ist vorgesehen, dass in dem Durchgangsabschnitt ein Dichtungsanschlag angeordnet ist, der in zumindest einem Betriebszustand der Dichtung mit einem Abschnitt der Dichtung in Kontakt steht. Der Dichtungsanschlag kann somit ein Eindrücken der Dichtung in den Durchgangsabschnitt verhindern bzw. begrenzen. Auf diese Weise kann verhindert werden, dass die Dichtung die wenigstens zwei Durchgangskanäle blockiert. Der zumindest eine Betriebszustand kann beispielsweise ein Betriebszustand sein, der bei einem Kältegerät mit geschlossenem Verschlusselement und einem Innendruck im Lagerraum auftritt, der im wesentlich einem Außendruck in der Umgebung des Kältegerätes entspricht ("Regelbetriebszustand"). Demzufolge verhindert der Dichtungsanschlag bereits bei diesem regelmäßig auftretenden Betriebszustand das Eindrücken der Dichtung in den Durchgangsabschnitt. Der zumindest eine Betriebszustand kann jedoch auch ein Betriebszustand sein, der bei einem Kältegerät mit geschlossenem Verschlusselement und einem Innendruck im Lagerraum auftritt, der kleiner als ein Außendruck in der Umgebung des Kältegerätes ist ("Temperaturausgleichsbetriebszustand"). Dieser Betriebszustand ergibt sich nach einem Öffnen des Verschlusselements, dem zwangsweise erfolgenden Einströmen von verhältnismäßig warmer Umgebungsluft in den Lagerraum und einem anschließenden Schließen des Verschlusselements. Bei dieser Variante kann vorgesehen sein, dass der Dichtungsanschlag derart ausgeführt ist, dass die Dichtung diesen zwar im Temperaturausgleichsbetriebszustand kontaktiert, im Regelbetriebszustand jedoch ein Spalt zwischen Dichtung und Dichtungsanschlag vorliegt. In dieser Variante kontaktiert die Dichtung den Dichtungsanschlag im Regelbetriebszustand somit nicht. Im Regelbetriebszustand steht somit ein relativ großer Strömungsquerschnitt zum Einströmen von Luft in den Lagerraum zur Verfügung, während im Temperaturausgleichsbetriebszustand zumindest noch ein minimaler Strömungsquerschnitt vorliegt. Erfindungsgemäß den Dichtungsanschlag kontaktierende Abschnitt der Dichtung ist vollständig oder teilweise durch einen Dichtungsfuß gebildet.

In dem Durchgangsabschnitt können zwei, drei, vier oder mehrere Dichtungsanschläge angeordnet sein. Denkbar ist, dass die zwei, drei, vier oder mehreren Dichtungsanschläge identisch oder zumindest im Wesentlichen identisch zueinander ausgebildet sind und/oder benachbart zu Durchgangskanälen angeordnet sind. Insbesondere ist denkbar, dass sich jeweils ein Dichtungsanschlag und ein Durchgangskanal, vorzugsweise in Längsrichtung der Dichtungsaufnahme, abwechseln.

Gemäß einer Ausführungsform ist vorgesehen, dass die wenigstens zwei Durchgangskanäle in einem Nahbereich angeordnet sind. Unter einem "Nahbereich" ist hierbei zu verstehen, dass ein kleinstmögliches, die Durchgangskanäle einhüllendes, gedankliches Quader eine maximale Kantenlänge von weniger als 30 cm, vorzugsweise weniger als 20 cm weiter vorzugsweise weniger als 15 cm und noch weiter vorzugsweise weniger als 10 cm aufweist. So kann beispielsweise vorgesehen sein, dass sich der Durchgangsabschnitt in Längsrichtung der Dichtungsaufnahme über weniger als 30 cm, vorzugsweise über weniger als 20 cm weiter vorzugsweise über weniger als 15 cm noch weiter vorzugsweise über weniger als 10 cm erstreckt. Denkbar ist auch, dass ein maximaler Abstand der wenigstens zwei Durchgangskanäle weniger als 20 cm, vorzugweise weniger als 10 cm weiter vorzugsweise weniger als 5 cm und weiter vorzugsweise weniger als 3 cm beträgt. Hierdurch wird ein sehr kompakter Aufbau des Durchgangsabschnitts mit einer spürbaren Erhöhung der lokalen Festigkeit ermöglicht. Darüber hinaus wird der Einsatz eines optionalen Heizelements begünstigt: sofern ein elektrisches Heizelement oder eine sogenannte Heisgasleitung des Kältemittelkreislaufes den Durchgangsabschnitt auf eine Minimaltemperatur erwärmen soll, um eine Kondensation von Wasser an diesem Abschnitt zu vermeiden, kann das Heizelement entsprechend kompakt, einfach und kostengünstig ausgebildet sein. Gemäß einer Ausführungsform ist daher vorgesehen, dass in einem Nahbereich des Durchgangsabschnitts ein Heizelement angeordnet ist, insbesondere dass das Heizelement lediglich im Nahbereich des Durchgangsabschnitts angeordnet ist.

Gemäß einer Ausführungsform ist vorgesehen, dass die wenigstens zwei Durchgangskanäle, insbesondere der Durchgangsabschnitt, einstückig in einem die Dichtungsaufnahme aufweisenden Bauteil, ausgebildet sind. Die Erhöhung der Festigkeit des Durchgangsabschnittes wirkt sich somit gleichzeitig auf das die Dichtungsaufnahme aufweisende Bauteil aus. Insbesondere kann vorgesehen sein, dass dieses Bauteil aus Kunststoff besteht. Beispielsweise kann es sich um eine durch Thermoformen umgeformte Kunststoffplatine handeln. Diese Ausführungsform ermöglicht darüber hinaus eine einfache und kostengünstige Fertigung, da die Dichtungsaufnahme und die Durchgangskanäle, insbesondere der Durchgangsabschnitt, in einem Fertigungsschritt geformt werden können. Bei dieser Ausführungsform ist vorgesehen, dass die Dichtungsaufnahme und der Durchgangsabschnitt einstückig in einer dem Lagerraum zugewandten Innenwandung des Verschlusselements, z.B. der Tür, ausgebildet sind. Die Innenwandung kann dabei insbesondere einem sogenannten Innenliner entsprechen. Denkbar ist, dass die Innenwandung teilweise oder vollständig durch Thermoformen hergestellt ist. Um eine Herstellung ohne zusätzliche Schieber im Thermoformwerkzeug zu ermöglichen, kann vorgesehen sein, dass die Dichtungsaufnahme und/oder der Durchgangsabschnitt inklusive der wenigstens zwei Durchgangskanäle bei einer Blickrichtung senkrecht zu einer Haupterstreckungsebene der Innenwandung zumindest im Wesentlichen hinterschnittfrei ausgebildet ist.

Um die Festigkeit des Durchgangsabschnitts zu erhöhen und gleichzeitig ein Eindrücken der Dichtung in die wenigstens zwei Durchgangskanäle weiter zu verhindern bzw. weiter zu beschränken, ist gemäß einer Ausführungsform vorgesehen, dass eine Breite wenigstens eines Durchgangskanals maximal dreimal der Breite der Dichtungsaufnahme entspricht, vorzugsweise maximal zweimal der Breite der Dichtungsaufnahme entspricht und weiter vorzugsweise im Wesentlichen der Breite der Dichtungsaufnahme entspricht. Sofern die Dichtungsaufnahme eine Nut aufweist oder durch eine Nut gebildet ist, kann insbesondere vorgesehen sein, dass eine Breite wenigstens eines Durchgangskanals maximal dreimal der Breite der Nut entspricht, vorzugsweise maximal zweimal der Breite der Nut entspricht und weiter vorzugsweise im Wesentlichen der Breite der Nut entspricht.Das Eindrücken der Dichtung in diese verhältnismäßig schmalen Durchgangskanäle ist somit nahezu ausgeschlossen. Unter der "Breite" eines Durchgangskanals ist dabei die mittlere Breite zu verstehen, die quer zu seiner Längsrichtung bzw. Längserstreckung gemessen wird. Insbesondere kann vorgesehen sein, dass die an einem oberen Endabschnitt des Durchgangskanals gemessene Breite den Werten dieser Ausführungsform entspricht.

Gemäß einem ersten Aspekt der Erfindung ist gemäß einer Ausführungsform vorgesehen, dass die wenigstens zwei Durchgangskanäle separat voneinander ausgebildet sind. Die wenigstens zwei Durchgangskanäle können dabei in Bezug auf ihre Länge und/oder ihrer Breite und/oder ihre Querschnittsform im Wesentlichen oder vollständig identisch ausgebildet sein.

Gemäß einer Ausführungsform ist vorgesehen, dass die wenigstens zwei Durchgangskanäle im Wesentlichen parallel zueinander verlaufen.

Gemäß einer Ausführungsform ist vorgesehen, dass Querschnitte in einer Schnittebene senkrecht zu einer Längsrichtung der Dichtungsaufnahme durch die wenigstens zwei Durchgangskanäle zumindest im Wesentlichen identisch sind. Insbesondere können die wenigstens zwei Durchgangskanäle eine identische Länge aufweisen.

Gemäß einer Ausführungsform ist vorgesehen, dass zwischen den wenigstens zwei Durchgangskanälen ein Dichtungsanschlag ausgebildet ist, der vorzugsweise einen Abschnitt der Dichtung kontaktiert. Die in Bezug auf die wenigstens zwei Durchgangskanäle mittige Anordnung des Dichtungsanschlags bewirkt somit eine effektive Verhinderung des Eindrückens der Dichtung in beide, den Dichtungsanschlag unmittelbar benachbarte Durchgangskanäle. Ein Schnitt entlang einer gegenüber der Längsrichtung der Dichtungsaufnahme senkrecht stehenden Ebene durch den Dichtungsanschlag kann im Wesentlichen oder vollständig einem Schnitt entlang einer gegenüber der Längsrichtung der Dichtungsaufnahme senkrecht stehenden Ebene außerhalb des Durchgangsabschnittes entsprechen.

Der Dichtungsanschlag nimmt einen Abschnitt der Dichtung auf, einen Dichtungsfuß.

Der Dichtungsanschlag kann hierfür eine in Längsrichtung der Dichtungsaufnahme verlaufende Aufnahme, zum Beispiel Nut, aufweisen. Möglich ist auch, dass weitere Abschnitte der Dichtung (zum Beispiel eine Dichtlippe) den Dichtungsanschlag kontaktieren. Hierfür kann der Dichtungsanschlag eine oder mehrere Anschlagsflächen aufweisen. Insbesondere ist möglich, dass der Dichtungsanschlag die Dichtung auch im Regelbetriebszustand aufnimmt und/oder abstützt. Der Dichtungsanschlag kann in Längsrichtung der Dichtungsaufnahme mittig zwischen den wenigstens zwei Durchgangskanälen ausgebildet sein.

Gemäß einem zweiten Aspekt der Erfindung ist gemäß einer Ausführungsform vorgesehen, dass ein Durchgangskanal zumindest abschnittsweise, vorzugsweise vollständig, innerhalb eines anderen Durchgangskanals ausgebildet ist. Insbesondere kann vorgesehen sein, dass innerhalb eines ersten Durchgangskanals ein zweiter Durchgangskanal angeordnet ist. Dabei kann der erste Durchgangskanal eine gegenüber dem zweiten Durchgangskanal größere Breite aufweisen. Der zweite Durchgangskanal kann in einem Boden bzw. einer Bodenwand des ersten Durchgangskanals ausgebildet sein. Durch diesen Aspekt der Erfindung wird insbesondere ermöglicht, dass einerseits ein Durchgangsabschnitt mit einem großen Strömungsquerschnitt (entsprechend der Summe der Querschnitte beider Durchgangskanäle) vorliegt. Durch diese Ausgestaltung kann jedoch andererseits einfach und zuverlässig sichergestellt werden, dass auch durch das Eindrücken der Dichtung in den ersten Durchgangskanal und ein daraus folgendes zumindest bereichsweise Verschließen des ersten Duchgangskanals, der zweite Durchgangskanal hingegen weiterhin einen Luftaustausch zwischen dem Lagerraum und der Umgebung ermöglicht. So kann bei diesem zweiten Aspekt der Erfindung insbesondere gemäß einer Ausführungsform vorgesehen sein, dass in einem ersten Betriebszustand der Dichtung die wenigstens zwei Durchgangskanäle die Dichtung überbrücken und in einem zweiten Betriebszustand der Dichtung ein Durchgangskanal durch die Dichtung teilweise oder vollständig blockiert ist und ein Durchgangskanal die Dichtung überbrückt. Der erste Betriebszustand kann dabei zum Beispiel dem Regelbetriebszustand entsprechen, während der zweite Betriebszustand zum Beispiel dem Temperaturausgleichsbetriebszustand entsprechen kann.

Aufgrund der Möglichkeit die wenigstens zwei Durchgangskanäle verhältnismäßig klein auszubilden, sodass diese von einem Benutzer kaum oder gar nicht wahrnehmbar sind, kann der Durchgangsabschnitt dort angeordnet werden, wo die Wirkung für den Abbau des Unterdrucks im Lagerraum am besten ist. Gemäß einer Ausführungsform ist vorgesehen, dass der Durchgangsabschnitt an einem vertikal verlaufenden Abschnitt der Dichtungsaufnahme angeordnet ist. Denkbar ist, dass der Durchgangsabschnitts im Wesentlichen bezüglich der Dichtungsaufnahme vertikal mittig angeordnet ist.

Gemäß einer Ausführungsform ist vorgesehen, dass zwei oder mehr erfindungsgemäße Durchgangsabschnitte an dem Kältegerät vorgesehen sind. Die zwei oder mehreren Durchgangsabschnitte können im Wesentlichen oder vollständig identisch zueinander ausgebildet sein.

Gemäß einer Ausführungsform ist vorgesehen, dass der Durchgangsabschnitt wenigstens drei Durchgangskanäle, vorzugsweise wenigstens vier Durchgangskanäle weiter vorzugsweise mehr als vier Durchgangskanäle aufweist. Um eine Mindestgröße der einzelnen Durchgangskanäle im Bezug auf ihren Querschnitt nicht zu unterschreiten und somit nach wie vor eine einfache und kostengünstige Fertigung zu erlauben, ist gemäß einer Ausführungsform vorgesehen das weniger als 20, vorzugsweise weniger als 15 und weiter vorzugsweise weniger als zehn Durchgangskanäle in einem Durchgangsabschnitt ausgebildet sind.

Die wenigstens zwei Durchgangskanäle können insbesondere einen Verbreiterungsbereich der Dichtungsaufnahme, insbesondere einer der Nut der Dichtungsaufnahme darstellen.

Die wenigstens zwei Durchgangskanäle können insbesondere geradlinig verlaufen. Dabei kann Luft direkt durch einen Durchgangskanal von der Umgebung in den Lagerraum strömen. Der Durchgangsabschnitt ist somit sehr kompakt aufgebaut.

Die Dichtung besteht insbesondere aus elastischem Material, nämlich Gummi. Die Dichtung weist einen Dichtungsfuß auf, der in der Dichtungsaufnahme, z.B. einer Nut, befestigt ist und die Dichtung darin hält. Die Dichtung kann eine, zwei oder mehrere Dichtlippen aufweisen und/oder eine oder zwei oder mehrere Hohlkammern aufweisen. Die Dichtung kann ein Extrusionsprofil sein.

Ausführungsbeispiele der vorliegenden Erfindung werden anhand der beigefügten Figuren erläutert. Dabei zeigen:
- Fig. 1: eine vereinfachte perspektivische Darstellung eines ersten Ausführungsbeispiels eines Haushaltskältegeräts;
- Fig. 2: eine Ansicht auf eine Innenwandung einer Tür des Haushaltskältegeräts gemäß Fig. 1;
- Fig. 3: einen Ausschnitt der Innenwandung gemäß Fig. 2;
- Fig. 4: eine Schnittdarstellung durch das Haushaltskältegerät gemäß Fig. 1; und
- Fig. 5: einen Ausschnitt einer Innenwandung eines zweiten Ausführungsbeispiels.

Gleiche oder funktionsgleiche Elemente sind mit den gleichen Bezugszeichen versehen.

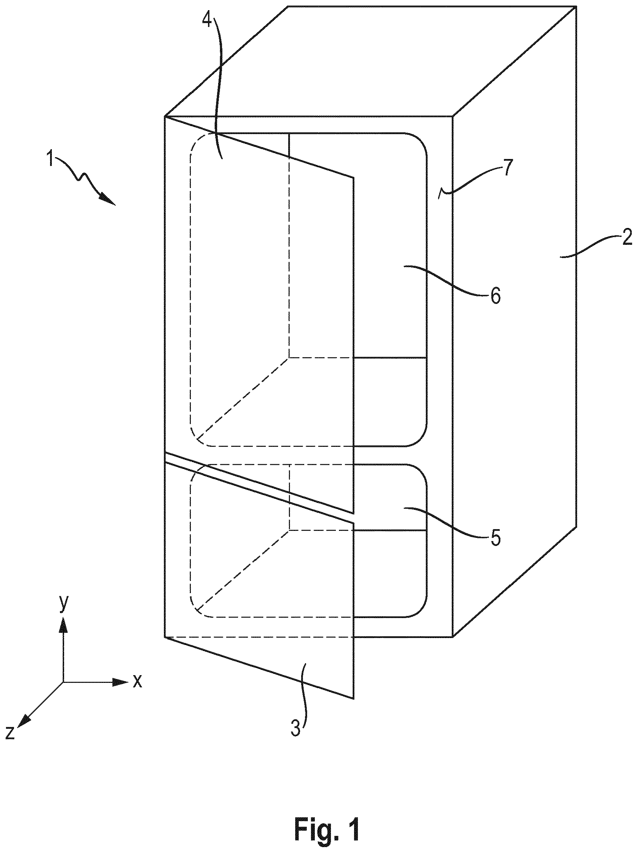

In Figur 1 ist in einer vereinfachten Darstellung ein Haushaltskältegerät 1 als Beispiel eines erfindungsgemäßen Kältegerätes gezeigt, welches eine Kühl-Gefrier-Kombination ist und welches zum Aufnehmen von Lebensmitteln ausgebildet ist. Das Haushaltskältegerät 1 umfasst einen Korpus 2 und zwei Türen 3,4 als Verschlusselemente. Die Türen 3,4 sind gelenkig an dem Korpus 2 angeschlagen und dienen zum Verschließen zweier Lagerräume 5,6. Eine Stirnfläche 7, welche an dem Korpus zwei ausgebildet ist und den Türen 3,4 zugewandt ist, dient als Anschlagfläche für nicht dargestellte Dichtungen, welche an der unteren Tür 3 und der oberen Tür 4 in einer Dichtungsaufnahme befestigt sind.

Beide Türen 3,4 umfassen eine äußere Türwandung und eine innere Türwandung, die gemeinsam einen mit Isolationsmaterial gefüllten Hohlraum begrenzen. Die Dichtungen sind in Dichtungsaufnahmen an den jeweiligen inneren Türwandungen angeordnet.

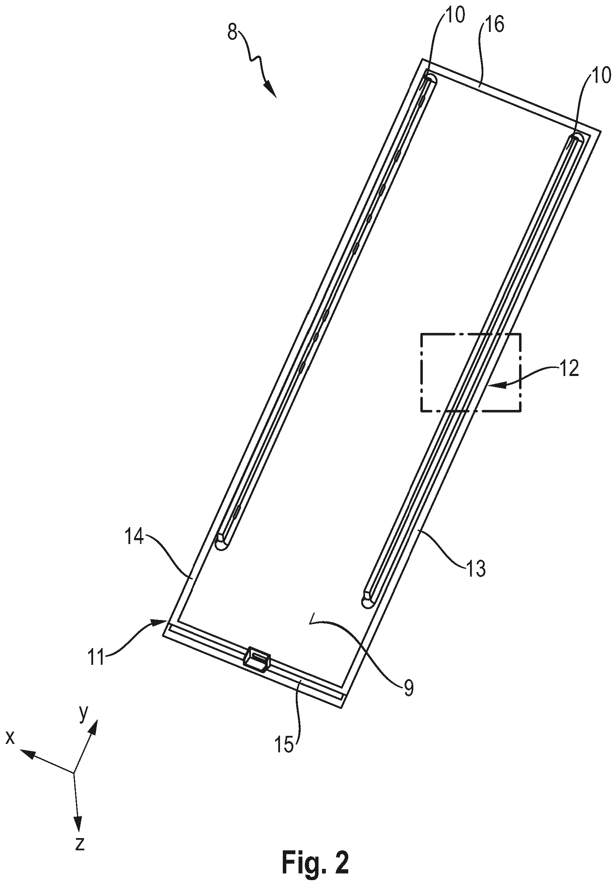

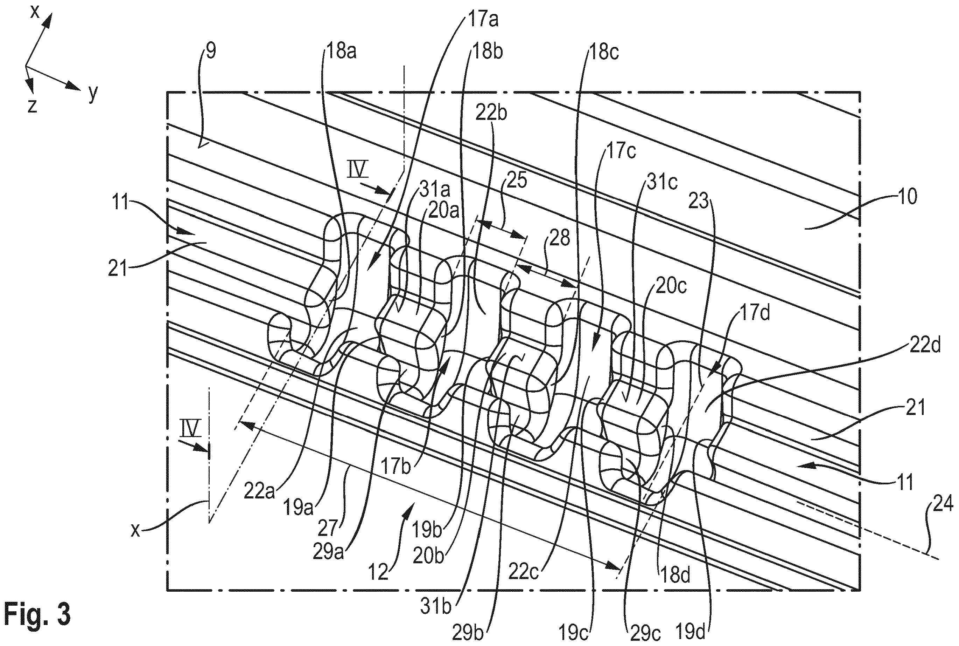

In Figur 2 ist die Innenwandung 8 der Tür 4 dargestellt. Die dreidimensionale Darstellung zeigt die dem Lagerraum 6 zugewandte Oberfläche 9. Die Innenwandung 8 besteht aus Kunststoff und ist durch Thermoformen aus einer Kunststoffplatine hergestellt. Die Innenwandung 8 weist zwei Holme 10 auf, die zum Befestigen von nicht dargestellten Türabstellern dienen. Die Innenwandung 8 weist eine umlaufende, insbesondere umlaufend geschlossene, Dichtungsaufnahme 11 auf. Die Dichtungsaufnahme 11 ist durch eine Nut 21 (siehe Figur 3) gebildet. Die Dichtungsaufnahme 11 weist zwei vertikal verlaufende Abschnitte 13,14 sowie zwei horizontal verlaufende Abschnitte 15,16 auf. Jeder der Abschnitte 13-16 verläuft geradlinig. Jeder der Abschnitte 13-16 weist eine Haupterstreckungsrichtung auf, entlang derer sich der jeweilige Abschnitt hauptsächlich erstreckt, d.h. entlang dessen eine Längserstreckung des jeweiligen Abschnitts 13-16 verläuft. So weisen die beiden vertikalen Abschnitte 13,14 vertikal ausgerichtete Längserstreckungen und die beiden horizontalen Abschnitte 15,16 horizontal ausgerichtete Längserstreckungen auf. Die Angabe "vertikal" bezieht sich stets auf ein bestimmungsgemäß aufgestelltes Haushaltskältegerät.

Die Nut 21 bzw. die Dichtungsaufnahme 11 ist in Richtung des Lagerraumes 6 offen ausgebildet. Die Nut 21 bzw. die komplette Dichtungsaufnahme 11 ist einstückig in der Innenwandung 8 ausgebildet und dient zur Aufnahme und Halterung einer nicht dargestellten Dichtung.

In dem zu Illustrationszwecken gestrichelt dargestellten Ausschnitt ist ein Durchgangsabschnitt 12 ausgebildet. Der Durchgangsabschnitt 12 dient zum Überbrücken der Dichtung, d.h. zum Luftaustausch des Lagerraumes 6 mit der Umgebung bei geschlossener Tür 4.

In Figur 3 ist der in Figur 2 gestrichelt dargestellte Ausschnitt vergrößert dargestellt. In diesem Ausführungsbeispiel umfasst der Durchgangsabschnitt 12 vier Durchgangskanäle 17a,17b,17c,17d. Die Durchgangskanäle 17a-17d sind separat voneinander und einstückig in der Innenwandung 8 ausgebildet. Je zwei benachbarte Durchgangskanäle 17a-17d sind durch einen einzelnen Dichtungsanschlag 20a,20b,20c voneinander beabstandet und getrennt. Die Durchgangskanäle 17a-17d und die Dichtungsanschläge 20a-20c wechseln sich somit ab. Sowohl die einzelnen Durchgangskanäle 17a-17d als auch die einzelnen Dichtungsanschläge 20a-20c sind jeweils identisch zueinander ausgebildet.

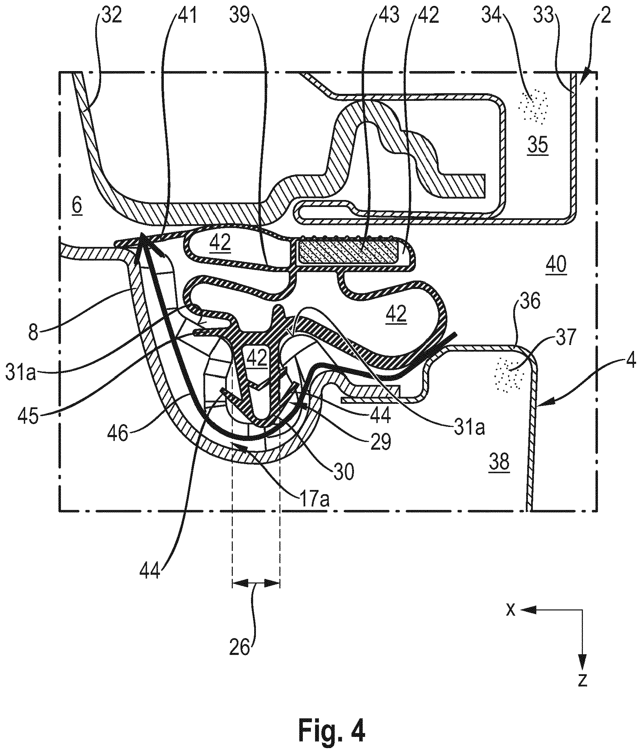

Die Durchgangskanäle 17a-17d stellen einen Verbreiterungsbereich der Dichtungsaufnahme 11, insbesondere der Nut 21 dar. Jeder Durchgangskanal 17a-17d ist durch eine in Richtung der Oberfläche 9 hin offene Nut gebildet und weist jeweils zwei Seitenwände 18a,18b,18c,18d bzw. 19a, 19b, 19c, 19d und eine Bodenwandung 22a,22b,22c,22d auf. Die Durchgangskanäle 17a-17d verlaufen parallel zueinander, d.h. ihre jeweiligen Längsrichtungen sind ebenfalls parallel zueinander. Die Längsrichtungen 23 der Durchgangskanäle 17a-17d weisen bezüglich einer Längsrichtung 24 der Dichtungsaufnahme 11 einen Winkel von 90 Grad auf, d.h. die Durchgangskanäle 17a-17d verlaufen quer im Bezug auf die Dichtungsaufnahme 11. Die Durchgangskanäle 17a-17d weisen jeweils eine gleiche Breite 25 auf. Die Breite 25 ist weniger als zweimal so groß wie eine Breite 26 der Nut 21 der Dichtungsaufnahme 11 (siehe Figur 4). Die Dichtungsanschläge 20a-20c weisen jeweils eine gleiche Breite 28 auf, welche im Wesentlichen der Breite 25 der Durchgangskanäle 17a-17d entspricht. Die in der Erstreckungsrichtung, d.h. der Längsrichtung 24, der Dichtungsaufnahme 11 bemessene Länge 27 des Durchgangsabschnitts 12 entspricht der Summe der Breiten 25 und 28 sämtlicher Durchgangskanäle 17a-17d und sämtlicher Dichtungsanschläge 20a-20c. Die Länge 27 des Durchgangsabschnitts 12 beträgt in diesem Ausführungsbeispiel weniger als 10 cm.

Jeder Dichtungsanschlag 20a-20c weist eine durch eine Nut gebildete Aufnahme 29a,29b,29c auf, die parallel zur Längsrichtung 24 der Dichtungsaufnahme 11 verläuft und dazu ausgebildet ist, einen Dichtungsfuß 30 aufzunehmen (siehe Figur 4). An die Aufnahmen 29a-29c schließen sich quer zur Längsrichtung 24 Anschlagsflächen 31a,31b,31c an. Diese Anschlagsflächen 31a-31c sind dazu ausgebildet, Abschnitte der Dichtung zu kontaktieren (siehe Figur 4). Mittels der Aufnahmen 29a-29c sowie der Anschlagsflächen 31a-31c wird ein Eindrücken der Dichtung in den Durchgangsabschnitt 12 und damit insbesondere in die Durchgangskanäle 20a-20c verhindert. In diesem Ausführungsbeispiel besteht bereits im Regelbetriebszustand ein Kontakt zwischen den Aufnahmen 29a-29c und der Dichtung (Dichtungsfuß 30) sowie zwischen den Anschlagsflächen 31a-31c und der Dichtung (Anschlagslippe 41).

Schnitte entlang einer gegenüber der Längsrichtung 24 der Dichtungsaufnahme 11 senkrecht stehenden Ebene durch die Dichtungsanschläge 20a-20c entsprechen einem Schnitt entlang einer gegenüber der Längsrichtung 24 der Dichtungsaufnahme 11 senkrecht stehenden Ebene außerhalb des Durchgangsabschnittes 12. Insbesondere wird dadurch durch die Aufnahmen 29a-29c sowie durch die Anschlagsflächen 31a-31c eine ebenso gute Führung und Befestigung der Dichtung gewährleistet, wie außerhalb des Durchgangsabschnittes 12.

Figur 4 zeigt einen Schnitt durch das Haushaltskältegerät 1 entlang der senkrecht zur Längsrichtung 24 der Dichtungsaufnahme 11 stehenden Schnittebene X (Figur 3) mit Blickrichtung vertikal nach oben. In Figur 4 ist die Tür 4 geschlossen und verschließt den im Wesentlichen innerhalb des Korpus 2 befindlichen Lagerraum 6. Der Korpus besteht aus einem Innenbehälter 32 und einer Außenwandung 33, welche gemeinsam einen mit Isolationsmaterial 34 gefüllten Hohlraum 35 begrenzen. Die Tür 4 umfasst neben der Innenwandung 8 eine Außenwandung 36. Die Innenwandung 8 und die Außenwandung 36 begrenzen einen mit Isolationsmaterial 37 gefüllten Hohlraum 38. Der Lagerraum 6 wird durch eine Dichtung 39 gegenüber der Umgebung 40 des Haushaltskältegerätes 1 im Wesentlichen vollständig abgedichtet. Die Dichtung 39 umfasst neben dem Dichtungsfuß 30 eine an der Innenwandung 8 anliegende Dichtlippe 41 sowie mehrere Hohlkammern 42. In einer der Hohlkammern 42 ist ein Magnet 43 angeordnet, welcher dafür sorgt, dass die Dichtung 39 zu der metallischen Außenwandung 33 angezogen wird. Die Dichtung besteht aus Gummi.

Der Dichtungsfuß 30 weist elastische Lippen 44 auf, mit denen er in der Aufnahme 29a verankert ist. Weiterhin weist die Dichtung 39 eine Anschlagslippe 45 auf, welche sich auf der Anschlagsfläche 31a elastisch abstützt. Zu Illustrationszwecken sind die Lippen 44 sowie die Anschlagslippe 45 in einem nicht ausgelenkten bzw. nicht verformten Zustand dargestellt.

Wie durch den Pfeil 46 dargestellt, strömt Luft von der Umgebung 40 in den Lagerraum 6, sobald dieser gegenüber der Umgebung 40 einen Unterdruck aufweist. Die Luft strömt dabei durch den Durchgangskanal 17a. Der Durchgangskanal 17a (bzw. auch die übrigen Durchgangskanäle 17b-17d) und somit der Durchgangsabschnitts 12 überbrücken somit die Dichtung 39. Beim Einströmen der Luft in den Lagerraum 6 hebt sich die Dichtlippe 41 ab, sodass Luft darunter hindurchströmen kann.

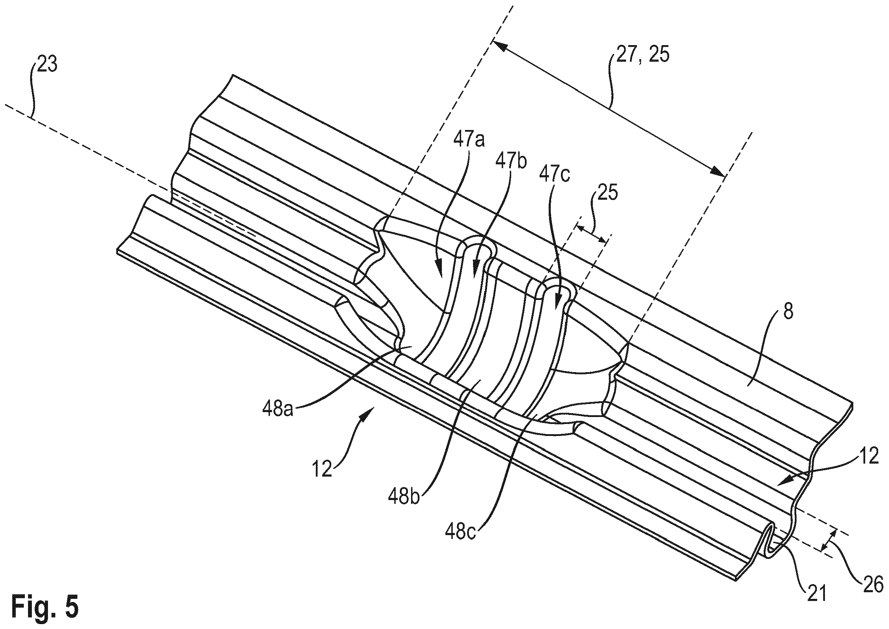

Figur 5 zeigt einen Ausschnitt einer Tür eines zweiten Ausführungsbeispiels. Dargestellt ist eine perspektivische Darstellung auf einen Ausschnitt (ein Randabschnitt) einer Innenwandung 8 vergleichbar mit der Darstellung nach Figur 3. Der Durchgangsabschnitt 12 weist in diesem Ausführungsbeispiel drei Durchgangskanäle 47a,47b,47c auf. Zwei Durchgangskanäle 47b,47c sind separat voneinander und parallel zueinander ausgebildet. Diese beiden Durchgangskanäle 47b,47c sind in einem größeren Durchgangskanal 47a angeordnet. Die Breite des größeren Durchgangskanals 47a entspricht im Wesentlichen der Länge 27 des Durchgangsabschnitts 12. Die Breite der kleineren Durchgangskanäle 47b,47c entspricht im wesentlichen der Breite 26 der Nut 21.

Der Durchgangsabschnitt 12 weist Dichtungsanschläge 48a,48b,48c auf, welche dazu ausgebildet sind, ein Eindrücken der Dichtung 39 in die zwei kleineren Durchgangskanäle 47b,47c zu verhindern. In dem Regelbetriebszustand ist das Einströmen von Luft aus der Umgebung 40 in den Lagerraum 6 durch alle drei Durchgangskanäle 47a,47b,47c möglich. Sofern jedoch, zum Beispiel in dem Temperaturausgleichsbetriebszustand, ein gegenüber der Umgebung 40 deutlicher Unterdruck in dem Lagerraum 6 vorliegt und die Dichtung 39 zwischen dem Korpus 2 und der Tür stark komprimiert wird kann diese den Durchgangskanal 47a abschnittsweise oder vollständig verschließen. Die Dichtungsanschläge 48a,48b,48c gewährleisten in diesem Fall, dass die Dichtung 39 nicht weiter in den Durchgangsabschnitt 12 eingedrückt wird, insbesondere dass die Dichtung 39 nicht in die Durchgangskanäle 47b,47c eingedrückt wird. Der im Lagerraum 6 herrschende Unterdruck kann mittels der zwei kleineren Durchgangskanäle 47b,47c abgebaut werden.

### Bezugszeichenliste

- 1: Haushaltskältegerät
- 2: Korpus
- 3: Tür
- 4: Tür
- 5: Lagerraum
- 6: Lagerraum
- 7: Stirnfläche
- 8: Innenwandung
- 9: Oberfläche
- 10: Holm
- 11: Dichtungsaufnahme
- 12: Durchgangsabschnitts
- 13: vertikaler Abschnitt
- 14: vertikaler Abschnitt
- 15: horizontaler Abschnitt
- 16: horizontaler Abschnitt
- 17a, 17b, 17c, 17d: Durchgangskanal
- 18a, 18b, 18c, 18d: Seitenwand
- 19a, 19b, 19c, 19d: Seitenwand
- 20a, 20b, 20c: Dichtungsanschlag
- 21: Nut
- 22a, 22b, 22c, 22d: Bodenwandung
- 23: Längsrichtung (Durchgangskanal)
- 24: Längsrichtung (Dichtungsaufnahme)
- 25: Breite (Durchgangskanal)
- 26: Breite (Nut)
- 27: Länge (Durchgangsabschnitt)
- 28: Breite (Dichtungsanschlag)
- 29a, 29b, 29c: Aufnahme
- 30: Dichtungsfuß
- 31a, 31b, 31c: Anschlagsfläche
- 32: Innenbehälter
- 33: Außenwandung
- 34: Isolationsmaterial
- 35: Hohlraum
- 36: Außenwandung
- 37: Isolationsmaterial
- 38: Hohlraum
- 39: Dichtung
- 40: Umgebung
- 41: Dichtlippe
- 42: Hohlkammer
- 43: Magnet
- 44: Lippe
- 45: Anschlagslippe
- 46: Pfeil
- 47a, 47b, 47c: Durchgangskanal
- 48a, 48b, 48c: Dichtungsanschlag

## Patentansprüche

1. Kältegerät, insbesondere Haushaltskältegerät mit einem Korpus (2) und einem Verschlusselement, die gemeinsam einen Lagerraum (6) begrenzen, sowie mit einer zwischen dem Korpus (2) und dem Verschlusselement angeordneten Dichtung (39), die zumindest teilweise in einer Dichtungsaufnahme (11) angeordnet ist, die Dichtungsaufnahme (11) aufweisend einen Durchgangsabschnitt (12) zum Überbrücken der Dichtung (39), wobei der Durchgangsabschnitt (12) wenigstens zwei Durchgangskanäle (17a-17d;47a-47c) aufweist, wobei der Durchgangsabschnitt (12) einen Luftaustausch zwischen dem Lagerraum (6) und der Umgebung bei geschlossenem Verschlusselement ermöglicht, **dadurch gekennzeichnet, dass** in dem Durchgangsabschnitt (12) ein Dichtungsanschlag (20a-20c;48a-48c) angeordnet ist, der in zumindest einem Betriebszustand der Dichtung (39) mit einem Abschnitt (30,45) der Dichtung (39) in Kontakt steht, wobei der den Dichtungsanschlag (20a-20c;48a-48c) kontaktierende Abschnitt der Dichtung (39) vollständig oder teilweise durch einen Dichtungsfuß (30) gebildet ist.

2. Kältegerät nach Anspruch 1, **dadurch gekennzeichnet, dass** die wenigstens zwei Durchgangskanäle (17a-17d;47a-47c) unter einem Winkel, vorzugsweise zwischen 60 Grad und 120 Grad, weiter vorzugsweise zwischen 75 Grad und 105 Grad, in Bezug auf eine Längsrichtung (24) der Dichtungsaufnahme (11) angeordnet sind.

3. Kältegerät nach Anspruch 1 oder 2, **dadurch gekennzeichnet, dass** die wenigstens zwei Durchgangskanäle (17a-17d;47a-47c) durch jeweils zwei Seitenwände (18a-18d,19a-19d) sowie eine Bodenwandung (22a-22d) begrenzt sind.

4. Kältegerät nach einem der vorhergehenden Ansprüche, **dadurch gekennzeichnet, dass** die wenigstens zwei Durchgangskanäle (17a-17d;47a-47c) in einem Nahbereich angeordnet sind.

5. Kältegerät nach einem der vorhergehenden Ansprüche, **dadurch gekennzeichnet, dass** die wenigstens zwei Durchgangskanäle (17a-17d;47a-47c), insbesondere der Durchgangsabschnitt (12), einstückig in einem die Dichtungsaufnahme (11) aufweisenden Bauteil, ausgebildet sind.

6. Kältegerät nach Anspruch 5, **dadurch gekennzeichnet, dass** die Dichtungsaufnahme (11) und der Durchgangsabschnitt (11) einstückig in einer dem Lagerraum (6) zugewandten Innenwandung (8) des Verschlusselements ausgebildet sind.

7. Kältegerät nach einem der vorhergehenden Ansprüche, **dadurch gekennzeichnet, dass** eine Breite (25) wenigstens eines Durchgangskanals (17a-17d;47a-47c) maximal dreimal der Breite der Dichtungsaufnahme (11) entspricht, vorzugsweise maximal zweimal der Breite der Dichtungsaufnahme (11) entspricht und weiter vorzugsweise im Wesentlichen der Breite der Dichtungsaufnahme (11) entspricht.

8. Kältegerät nach einem der vorhergehenden Ansprüche, **dadurch gekennzeichnet, dass** die wenigstens zwei Durchgangskanäle (17a-17d;47b-47c) separat voneinander ausgebildet sind.

9. Kältegerät nach einem der vorhergehenden Ansprüche, **dadurch gekennzeichnet, dass** die wenigstens zwei Durchgangskanäle (17a-17d;47a-47c) im Wesentlichen parallel zueinander verlaufen.

10. Kältegerät nach einem der vorhergehenden Ansprüche, **dadurch gekennzeichnet, dass** Querschnitte in einer Schnittebene (X) senkrecht zu einer Längsrichtung (24) der Dichtungsaufnahme (11) durch die wenigstens zwei Durchgangskanäle (17a-17d;47b-47c) zumindest im Wesentlichen identisch sind.

11. Kältegerät nach einem der vorhergehenden Ansprüche, **dadurch gekennzeichnet, dass** zwischen den wenigstens zwei Durchgangskanälen (17a-17d;47b-47c) der Dichtungsanschlag (20a-20c;48a-48c) ausgebildet ist, der einen Abschnitt (30,45) der Dichtung (39) kontaktiert.

12. Kältegerät nach einem der Ansprüche 1 bis 7, **dadurch gekennzeichnet, dass** ein Durchgangskanal (47b,47c) zumindest abschnittsweise, vorzugsweise vollständig, innerhalb eines anderen Durchgangskanals (47a) ausgebildet ist.

13. Kältegerät nach einem der vorhergehenden Ansprüche, **dadurch gekennzeichnet, dass** der Dichtungsanschlag (20a-20c;48a-48c) in Längsrichtung der Dichtungsaufnahme (11) mittig zwischen den wenigstens zwei Durchgangskanälen (17a-17d;47a-47c) ausgebildet ist.

14. Kältegerät nach einem der vorhergehenden Ansprüche, **dadurch gekennzeichnet, dass** sich jeweils ein Dichtungsanschlag (20a-20c;48a-48c) und ein Durchgangskanal(17a-17d;47a-47c), in Längsrichtung der Dichtungsaufnahme, abwechseln.

15. Kältegerät nach einem der vorhergehenden Ansprüche, **dadurch gekennzeichnet, dass** in einem ersten Betriebszustand der Dichtung (39) die wenigstens zwei Durchgangskanäle (47a-47c) die Dichtung (39) überbrücken und in einem zweiten Betriebszustand der Dichtung (39) ein Durchgangskanal (47a) durch die Dichtung (39) teilweise oder vollständig blockiert ist und ein Durchgangskanal (47b,47c) die Dichtung (39) überbrückt.

## Claims

1. Refrigeration appliance, in particular a household refrigeration appliance, comprising a body (2) and a closure element, which jointly delimit a storage chamber (6), and comprising a seal (39) which is arranged between the body (2) and the closure element and which is at least partly arranged in a seal receptacle (11), said seal receptacle (11) having a passage section (12) for bypassing the seal (39), wherein the passage section (12) has at least two passage channels (17a-17d; 47a-47c), wherein the passage section (12) enables an exchange of air between the storage chamber (6) and the surroundings when the closure element is closed, **characterised in that** a seal stop (20a-20c; 48a-48c) is arranged in the passage section (12), said seal stop being in contact with a section (30, 45) of the seal (39) in at least one operating state of the seal (39), wherein the section of the seal (39) in contact with the seal stop (20a-20c; 48a-48c) is formed entirely or partly by a sealing foot (30).

2. Refrigeration appliance according to claim 1, **characterised in that** the at least two passage channels (17a-17d; 47a-47c) are arranged at an angle, preferably between 60 degrees and 120 degrees, further preferably between 75 degrees and 105 degrees, relative to a longitudinal direction (24) of the seal receptacle (11).

3. Refrigeration appliance according to claim 1 or 2, **characterised in that** the at least two passage channels (17a-17d; 47a-47c) are delimited in each case by two side walls (18a-18d, 19a-19d) and a bottom wall (22a-22d).

4. Refrigeration appliance according to one of the preceding claims, **characterised in that** the at least two passage channels (17a-17d; 47a-47c) are arranged in an immediate vicinity.

5. Refrigeration appliance according to one of the preceding claims, **characterised in that** the at least two passage channels (17a-17d; 47a-47c), in particular the passage section (12), are configured integrally in a component comprising the seal receptacle (11).

6. Refrigeration appliance according to claim 5, **characterised in that** the seal receptacle (11) and the passage section (11) are integrally configured in an inner wall (8) of the closure element facing the storage chamber (6).

7. Refrigeration appliance according to one of the preceding claims, **characterised in that** a width (25) of at least one passage channel (17a-17d; 47a-47c) corresponds to a maximum of three times the width of the seal receptacle (11), preferably corresponds to a maximum of twice the width of the seal receptacle (11), and further preferably substantially corresponds to the width of the seal receptacle (11).

8. Refrigeration appliance according to one of the preceding claims, **characterised in that** the at least two passage channels (17a-17d; 47b-47c) are configured separately from one another.

9. Refrigeration appliance according to one of the preceding claims, **characterised in that** the at least two passage channels (17a-17d; 47a-47c) run substantially parallel to one another.

10. Refrigeration appliance according to one of the preceding claims, **characterised in that** cross-sections in a cutting plane (X) perpendicular to a longitudinal direction (24) of the seal receptacle (11) through the at least two passage channels (17a-17d; 47b-47c) are at least substantially identical.

11. Refrigeration appliance according to one of the preceding claims, **characterised in that** the seal stop (20a-20c; 48a-48c) is configured between the at least two passage channels (17a-17d; 47b-47c), said seal stop being in contact with a section (30, 45) of the seal (39).

12. Refrigeration appliance according to one of claims 1 to 7, **characterised in that** a passage channel (47b, 47c) is configured at least in some sections, preferably entirely, inside a further passage channel (47a).

13. Refrigeration appliance according to one of the preceding claims, **characterised in that**, in the longitudinal direction of the seal receptacle (11), the seal stop (20a-20c; 48a-48c) is configured centrally between the at least two passage channels (17a-17d; 47b-47c).

14. Refrigeration appliance according to one of the preceding claims, **characterised in that** in each case a seal stop (20a-20c; 48a-48c) and a passage channel (17a-17d; 47b-47c) alternate in the longitudinal direction of the seal receptacle.

15. Refrigeration appliance according to one of the preceding claims, **characterised in that** in a first operating state of the seal (39) the at least two passage channels (47a-47c) bypass the seal (39) and in a second operating state of the seal (39) one passage channel (47a) is partly or entirely blocked by the seal (39) and one passage channel (47b, 47c) bypasses the seal (39).

## Revendications

1. Appareil frigorifique, en particulier appareil frigorifique électroménager comprenant un bâti (2) et un élément de fermeture, lesquels délimitent ensemble un espace de rangement (6), ainsi qu'un joint (39) situé entre le bâti (2) et l'élément de fermeture, lequel se trouve au moins en partie dans un logement de joint (11), le logement de joint (11) présentant une section de passage (12) pour ponter le joint (39), dans lequel la section de passage (12) comprend au moins deux canaux de passage (17a-17d;47a-47c), dans lequel la section de passage (12) permet un échange d'air entre l'espace de rangement (6) et l'environnement lorsque l'élément de fermeture est fermé, **caractérisé en ce que** dans la section de passage (12) se trouve une butée de joint (20a-20c;48a-48c), laquelle est en contact dans au moins un état de fonctionnement du joint (39) avec une section (30, 45) du joint (39), dans lequel la section du joint (39) étant en contact la butée de joint (20a-20c;48a-48c) est formée entièrement ou en partie par un pied de joint (30).

2. Appareil frigorifique selon la revendication 1, **caractérisé en ce que** les au moins deux canaux de passage (17a-17d;47a-47c) se trouvent sous un angle, de préférence entre 60 degrés et 120 degrés, plus préférablement entre 75 degrés et 105 degrés, par rapport au sens longitudinal (24) du logement de joint (11).

3. Appareil frigorifique selon la revendication 1 ou 2, **caractérisé en ce que** les au moins deux canaux de passage (17a-17d;47a-47c) sont délimités par à chaque fois deux parois latérales (18a-18d,19a-19d) ainsi que par une paroi de sol (22a-22d).

4. Appareil frigorifique selon l'une des revendications précédentes, **caractérisé en ce que** les au moins deux canaux de passage (17a-17d;47a-47c) se trouvent à proximité l'un de l'autre.

5. Appareil frigorifique selon l'une des revendications précédentes, **caractérisé en ce que** les au moins deux canaux de passage (17a-17d;47a-47c), en particulier la section de passage (12) sont réalisés monobloc dans un module comprenant le logement de joint (11).

6. Appareil frigorifique selon la revendication 5, **caractérisé en ce que** le logement de joint (11) et la section de passage (11) sont réalisés monobloc dans une paroi intérieure (8) de l'élément de fermeture tournée vers l'espace de rangement (6).

7. Appareil frigorifique selon l'une des revendications précédentes, **caractérisé en ce que** une largeur (25) d'au moins un canal de passage (17a-17d;47a-47c) correspond à au maximum trois fois la largeur du logement de joint (11), correspond de préférence à au maximum deux fois la largeur du logement de joint (11) et plus préférablement correspond essentiellement à la largeur du logement de joint (11).

8. Appareil frigorifique selon l'une des revendications précédentes, **caractérisé en ce que** les au moins deux canaux de passage (17a-17d;47b-47c) sont réalisés séparément l'un de l'autre.

9. Appareil frigorifique selon l'une des revendications précédentes, **caractérisé en ce que** les au moins deux canaux de passage (17a-17d;47a-47c) s'étendent essentiellement parallèlement l'un par rapport à l'autre.

10. Appareil frigorifique selon l'une des revendications précédentes, **caractérisé en ce que** les coupes transversales dans un plan de coupe (X) à la perpendiculaire d'un sens longitudinal (24) du logement de joint (11) passant par les au moins deux canaux de passage (17a-17d;47b-47c) sont au moins essentiellement identiques.

11. Appareil frigorifique selon l'une des revendications précédentes, **caractérisé en ce que** la butée de joint (20a-20c;48a-48c) est réalisée entre les au moins deux canaux de passage (17a-17d;47b-47c), laquelle entre en contact avec une section (30, 45) du joint (39).

12. Appareil frigorifique selon l'une des revendications 1 à 7, **caractérisé en ce qu'**un canal de passage (47b,47c) est réalisé au moins par sections, de préférence entièrement, à l'intérieur d'un autre canal de passage (47a).

13. Appareil frigorifique selon l'une des revendications précédentes, **caractérisé en ce que** la butée de joint (20a-20c;48a-48c) est réalisée, dans le sens longitudinal du logement de joint (11), en position centrale entre les au moins deux canaux de passage (17a-17d;47a-47c).

14. Appareil frigorifique selon l'une des revendications précédentes, **caractérisé en ce que** à chaque fois, une butée de joint (20a-20c;48a-48c) et un canal de passage (17a-17d;47a-47c) alternent dans le sens longitudinal du logement de joint.

15. Appareil frigorifique selon l'une des revendications précédentes, **caractérisé en ce que** dans un premier état de fonctionnement du joint (39), les au moins deux canaux de passage (47a-47c) pontent le joint (39) et dans un deuxième état de fonctionnement du joint (39), un canal de passage (47a) passant par le joint (39) est partiellement ou complètement bloqué, et un canal de passage (47b,47c) ponte le joint (39).
